# EUROPÄISCHE PATENTSCHRIFT

(11) **EP 0 765 604 B1**
(45) Veröffentlichungstag und Bekanntmachung des Hinweises auf die Patenterteilung: **08.11.2000**
(21) Anmeldenummer: 95115219.8
(22) Anmeldetag: 27.09.1995
(51) Int. Cl.: A23F 3/40, B65B 29/02, B65B 1/36

(54) **Verfahren und Vorrichtung zum Aromatisieren von Tee und teeähnlichen Erzeugnissen**
Process and apparatus for flavouring tea and similar products
Procédé et installation pour aromatiser du thé et des produits analogues au thé

(43) Veröffentlichungstag der Anmeldung: 02.04.1997
(73) Patentinhaber: TEEPACK SPEZIALMASCHINEN GMBH & CO. KG, D-40667 Meerbusch (DE)
(72) Erfinder: Nippes, Helmut, D-42699 Solingen-Merscheid (DE); Klein, Michael, D-47877 Willich (DE)
(74) Vertreter: Stenger, Watzke & Ring Patentanwälte

(56) Entgegenhaltungen:
- DE-A- 3 108 178
- DE-A- 3 115 589
- DE-A- 3 701 230
- DE-C- 3 720 362
- GB-A- 1 566 248

## Beschreibung

Die Erfindung betrifft ein Verfahren und eine Vorrichtung zum Aromatisieren von Tee und teeähnlichen Erzeugnissen mit vorzugsweise granulierten Aromastoffen, bei dem aus einem Aromareservoir eine vorbestimmte Aromamenge abgezogen wird, die mit einer vorbestimmten Teemenge auf einer kontinuierlich bewegten Hüllstoffbahn, insbesondere Filterpapierbahn, aufgebracht wird und anschließend in daraus geformten Teebeuteln abgepackt wird.

Zur Aromatisierung von Tee ist es aus der DE-OS 37 01 230 bekannt, an einer herkömmliche Teebeutelabpackmaschine eine Aromadosierungsvorrichtung anzuschließen, mit der Aromagranulat oder -agglomerat mittels zweier verstellbarer Dosierkammern in definierten Mengen dem Tee zudosiert wird. Das feinschnittige Tee-Füllgut wird in der Teebeutelabpackmaschine mittels eines Dosierrades in gleiche Portionsmengen aufgeteilt und sodann mittels eines Übertragungsrades auf einen sich kontinuierlich bewegenden Hüllstoff, nämlich eine Filterpapierbahn, in Form kleiner Häufchen aufgebracht. Die Aromazudosierung zum Tee wird dabei in den Übergaberaum zwischen dem Dosierrad und dem Übertragungsrad vorgenommen, wobei durch die Bewegungsvorgänge ein Tee/Aromagemisch gebildet wird, welches sodann als Häufchen auf der Filterpapierbahn abgelegt und in daraus geformten Teebeuteln abgepackt wird.

Als grundsätzlich nachteilig hat sich im Rahmen des maschinellen Dosiervorgangs die Gemischbildung aus Tee und Aromastoff erwiesen. Aromen sind Zubereitungen von speziellen natürlichen, naturidentischen und künstlichen Geruchs- und Geschmacksstoffen, die zuckrige Eigenschaften aufweisen, teilweise hygroskopisch sind und dazu neigen, sich von dem feinschnittigen Füllgut abzusondern und zu verklumpen. Dies führt in der Maschinenkammer zwischen Dosierrad und Übertragungsrad, wo die Zudosierung vorgenommen wird, zu Verschmutzungen, die letztlich eine gleichmäßige und reproduzierbare Zugabe der Aromastoffe unmöglich machen. Die Dosierringe verkleben, die im Dosierrad und Übertragungsrad vorhandenen Kammern setzen sich zu, so daß die auf der Filterpapierbahn abgelegten Häufchen mengenmäßig unterschiedlich groß sind, und es wird schließlich erforderlich, häufige Maschinenreinigungen mit Demontagen vorzunehmen.

Aus der DE-OS 32 11 696 ist ferner ein Verfahren zur Herstellung eines Aromapräparates bekannt, welches zum Aromatisieren von Tee geeignet sein soll. Nachteiligerweise wird auch dies Aromapräparat mit dem Blatt-Tee vermischt und anschließend in Teebeutel verpackt, womit die oben beschriebenen Beeinträchtigungen in gleicher Weise auftreten.

Der Erfindung liegt in Anbetracht des Standes der Technik die Aufgabe zugrunde, unter Meidung der obengenannten Nachteile eine Aromatisierung von Tee oder teeähnlichen Erzeugnissen vorzuschlagen, mit der eine sichere Aroma-Dosierung ohne Maschinenverschmutzung auch bei hohen Verpackungsgeschwindigkeiten von mehr als 300 Teebeutel pro Minute ermöglicht ist.

Die Aufgabe ist an einem Verfahren der eingangs genannten Art erfindungsgemäß dadurch gelöst, daß der Aromastoff in einer ersten Verfahrensstufe als dosiertes, gesondertes Häufchen auf der Hüllstoffbahn abgelegt wird und daß ein Tee-Häufchen auf der Hüllstoffbahn benachbart zum Aromastoff-Häufchen abgelegt wird, die anschließend gemeinsam mit einem Teebeutel abgepackt werden. Vorzugsweise wird anschließend in einer zweiten Verfahrensstufe das Aromastoff-Häufchen mit dem Tee in der vorgegebenen Menge im Rahmen eines separaten Ablagevorgangs abgedeckt derart, daß die das Aromastoff-Häufchen überlagernde und an allen freien Seiten umschließende Teemenge als Siegel- und Schutzschicht für den Aromastoff während der sich anschließenden Transport- und Abpackvorgänge ausgebildet ist. Mit diesen Verfahren ist es möglich, eine exakte Aromadosierung selbst an schnellaufenden Teebeutelabpackmaschinen mit Taktzahlen bis zu 400 Beutel pro Minute durchzuführen, da jedwede Form eines Zudosierens und/oder Mischvorgangs vermieden ist und statt dessen ein einfaches und schnelldurchführendes Ablegen eines Aromastoff-Häufchens auf der Hüllstoffbahn vorgenommen wird. Hierdurch ist auch schon in diesem Verfahrensstadium jegliche Staubbildung oder Materialstreuung minimiert und sind dadurch die mit Verschmutzungen, Verkrustungen und Verklebungen verbundenen Nachteile des Standes der Technik ausgeräumt.

Dadurch, daß erfindungsgemäß im zweiten Verfahrensschritt das abgelegte Aromastoff-Häufchen von allen freien Seiten mit Tee als Siegel- und Schutzschicht abgedeckt wird, ein Teehäufchen folglich alle bislang freien Seiten des Aromastoff-Häufchens umschließt, befindet sich für die weiteren Verarbeitungsvorgänge kein freier Aromastoff an irgendeiner Oberfläche. Vielmehr deckt der Tee das Aromagranulat gänzlich ab und wird durch diese Schichtanordnung jedwede Verschmutzung von Dosierrad und Übertragungsrad der Teedosierung vermieden. Das Aromastoff-Häufchen ist in seiner Positionierung praktisch fixiert. Die sich anschließenden Transport- und Abpackvorgänge können störungsfrei und wartungsfrei auch an schnellaufenden Maschinen durchgeführt werden. Die Maschine bleibt relativ sauber, da sie ausschließlich mit dem Tee in Berührung kommt.

Gemäß einer zweckmäßigen Ausgestaltung der Erfindung wird vorgeschlagen, daß das innerhalb des Tee-Häufchens angeordnete Aromastoff-Häufchen außermittig angeordnet wird. Hiermit ist eine Optimierung der Transport-und Abpackvorgänge unter Berücksichtigung der dort auf das Beutelfüllgut einwirkenden Kräfte, auch bei Doppelkammerbeuteln, möglich. Bei diesen ergibt sich darüber hinaus durch die erfindungsgemäße Verfahrensweise noch die Möglichkeit, feinere Dosierungen an Aromastoff dadurch vorzunehmen, daß entweder in jede Kammer oder nur in eine Kammer des Doppelkammer-Teebeutels ein Aromastoff-Häufchen eingebracht wird. Eine solche Variationsmöglichkeit ist nach dem Stand der Technik nicht gegeben.

Vorzugsweise ist darüber hinaus vorgesehen, anschließend an die Ablage des Aromastoff-Häufchens auf der Hüllstoffbahn, jedoch vor der Ablage bzw.

Abdeckung mit dem Tee, eine Qualitäts- und Quantitätskontrolle der Aromadosierung durchzuführen. Diese erfolgt zweckmäßigerweise durch Absaugen einer bestimmten Zahl von Häufchen als Proben, die dann separat im Hinblick darauf untersucht werden können, ob Qualität und Dosierung des Aromastoffes den Vorgaben entsprechen, womit es möglich wird, dem Fertigprodukt eine Qualitätsgarantie zu geben. Dies ist insbesondere dort wichtig, wo die Aromatisierung mit einer Vitaminisierung verbunden ist oder bestimmte medizinische Indikationen zu erfüllen sind.

Vorzugsweise wird der Aromastoff als Granulat mit folgender Korn-Größenverteilung verwendet:

| Verteilung in % | Korngröße in mm |
|---|---|
| weniger 1,0 | kleiner 0,2 |
| weniger 3,0 | 0,2 bis 0,5 |
| 30-50 | 0,5 bis 1,0 |
| 40-60 | 1,0 bis 1,4 |
| weniger 0,5 | 1,4 bis 2,0 |
| max. 0,2 | größer 2,0, |

wobei die Aromastoff-Häufchen flach abgelegt werden und eine Größe von 0,1 bis 1 cm³ haben.

Zur apparativen Lösung der der Erfindung zugrundeliegenden Aufgabe wird erfindungsgemäß eine Vorrichtung zum Aromatisieren von Tee und teeähnlichen Erzeugnissen mit einer über einer Hüllstoffbahn angeordneten Dosiereinrichtung für den Tee und einer Dosiereinrichtung für den Aromastoff vorgeschlagen, bei der die Aromastoff-Dosiereinrichtung in bezug zu der Bewegungsrichtung der Hüllstoffbahn mit Abstand vor der Tee-Dosiereinrichtung direkt oberhalb der Hüllstoffbahn angeordnet ist. Vorzugsweise sind Abstand und Taktung der Aromastoff-Dosiereinrichtung und der Teedosiereinrichtung so miteinander koordiniert, daß das Aromastoff-Häufchen an sämtlichen freien Seiten vom Tee nach dessen Aufgabe auf die Hüllstoffbahn abgedeckt ist. Durch die Anordnung der Aromastoff-Dosiereinrichtung mit Abstand vor der Tee-Dosiereinrichtung wird es ermöglicht, ein völlig separates Aromastoff-Häufchen ohne einen Mischvorgang zu positionieren und dieses anschließend mit Tee abzudecken. Dadurch, daß die Aromastoff-Dosiereinrichtung direkt oberhalb der Hüllstoffbahn angeordnet ist, wird eine verlust- und staubfreie, exakt dosierbare Ablage des Aromastoff-Häufchens erreicht und ist jegliches Fallen des Aromastoffs mit der damit verbundenen Staubfahnenbildung und Verstreuung vermieden.

Vorzugsweise besteht die Aromastoff-Dosiereinrichtung aus einem Reservoir und einer daran angeschlossenen Drehtrommel mit mindestens einer Dosierkammer zur Aufnahme von Aromastoff aus dem Reservoir und Ablage des Aromastoffs als Häufchen auf der Hüllstoffbahn. Die Drehtrommel kann dabei auf einer zentralen Welle angeordnet sein, die synchron von der Teebeutelabpackmaschine angetrieben wird. Dabei ist es zweckmäßig, die Drehtrommel von einem sie umschließenden Gehäuse unter Freilassung der Aromastoff-Aufnahme und -abgabebereiche abzudecken. Es kann ferner mit Vorteil ein Abstreifmesser an der Drehtrommel im Aufnahmebereich angeordnet sein, mit welchem eine exakte Kammerfüllung durchführbar ist.

Um die Aromastoffe trocken und rieselfähig zu halten, ist vorgeschlagen, die Aromastoff-Dosiereinrichtung gegenüber der Umgebung zu klimatisieren und/oder zu konditionieren. Hierzu kann die Dosierung luftdicht abgeschlossen oder mit innerem Überdruck gefahren werden.

Gemäß dem bevorzugten Ausführungsbeispiel der Erfindung weist die Trommel zwei einander im Winkel gegenüberliegende, sich in radialer Richtung erstreckende Aussparungen auf, die mit verstellbaren und/oder auswechselbaren Segmenteinsätzen versehen sind, deren außen angeordnete Flächen als Dosierkammern, vorzugsweise tropfenförmig konkav, ausgebildet sind. Eine solche Drehtrommel ist einfach herzustellen, ermöglicht es durch die Zwei-Kammer-Ausbildung, hohe Taktzahlen zu fahren und ist durch die Auswechselbarkeit und/oder Verstellbarkeit der Segmenteinsätze an verschiedene Dosiervolumina leicht anpaßbar. Die tropfenförmig konkave Ausbildung der Außenflächen gemäß bevorzugtem Ausführungsbeispiel erleichtert in Anbetracht des Fließverhaltens der Aromastoffe die Aufnahme und die Abgabe des Gutes, wobei in vorteilhafter Ausgestaltung der Erfindung vorgeschlagen ist, den voluminösen Teil des Tropfens in Drehrichtung der Drehtrommel nachlaufend anzuordnen.

Zur Mengen- und Qualitätskontrolle kann vorgesehen sein, in Bewegungsrichtung hinter der Aromastoff-Dosiereinrichtung eine Probenahme-Einrichtung anzuordnen, die vorzugsweise aus einer Absaugeinrichtung mit einem über der Hüllstoffbahn angeordneten Saugrohr und einer Vakuumpumpe besteht. Hiermit können einzelne Aromastoff-Häufchen abgesaugt werden und in beliebiger Zahl einer Auswertungseinheit zur Qualitäts- und Gewichtskontrolle zugeführt werden. Dabei kann es vorteilhaft sein, mit einer vor und/oder hinter der Absaugeinrichtung angeordneten Lichtschranke oder anderweitiger sensorischer Abtastung eine Kontrolle der abgelegten Aromastoff-Häufchen durchzuführen.

Insgesamt ist es mit der Erfindung erstmals möglich, hohe Taktgeschwindigkeiten im Rahmen der Verpackung von aromatisiertem Tee in Aufgußbeuteln zu fahren und eine exakte Dosierung, einschließlich einer Mengen- und Qualitätskontrolle durchzuführen. Der Aromastoff wird durch den abzupackenden Tee so abgedeckt, daß eine Verschmutzung der Maschine nicht mehr zu befürchten ist und somit das bisher notwendige tägliche Demontieren, Reinigen und Wiederzusammensetzen der Teedosierung entfällt. Die Dosierung ist flexibel ausgerichtet sowohl hinsichtlich der Einzelmengen als auch der Portionsmengen, die sich im Teebeutel selbst abschließend finden.

Weitere Einzelheiten, Merkmale und Vorteile des Gegenstandes der Erfindung ergeben sich aus der nachfolgenden Beschreibung der zugehörigen Zeichnung, in der eine bevorzugte Aroma-Dosierung dargestellt ist. In der Zeichnung zeigt:
- Fig. 1: eine schematisierte Frontansicht eines Teiles einer Teebeutelabpackmaschine mit Aromazugabe,
- Fig. 2: eine schematisierte Darstellung eines Verfahrens zum Aromatisieren von Tee und
- Fig. 3: eine gleiche Darstellung zur Verdeutlichung einer geänderten Dosierung.

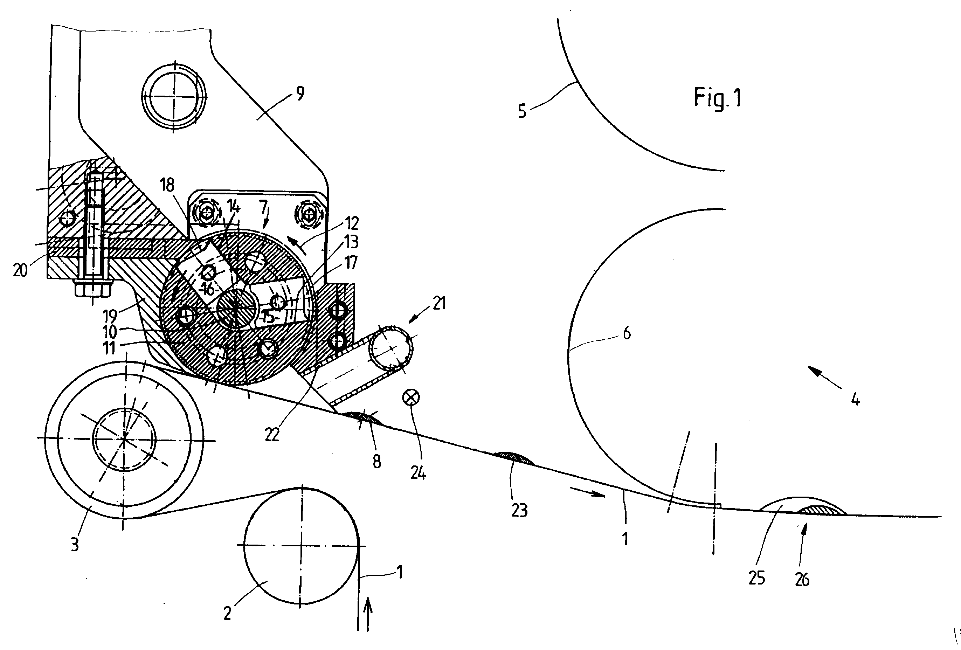

Eine herkömmliche Teebeutelabpackmaschine weist gemäß Fig. 1 der Zeichnung eine durch die Maschine transportierte Hüllstoffbahn, nämlich Filterpapierbahn 1 auf, die gemäß dem in Fig. 1 dargestellten Ausschnitt der Teebeutelabpackmaschine über eine Umlenkrolle 2 und eine Umlenkrolle 3 zu einer Tee-Dosiereinrichtung 4 als flaches Band verläuft. Die Filterpapierbahn 1 wird kontinuierlich durch die Teebeutelabpackmaschine in Pfeilrichtung bewegt, wobei in der Tee-Dosiereinrichtung 4 von einem Dosierrad 5 in gleichen Portionsmengen abgegriffener Tee mittels eines Übertragungsrades 6 auf der sich kontinuierlich bewegenden Filterpapierbahn 1 abgelegt wird. Anschließend wird in nicht dargestellter Weise aus der Filterpapier 1 ein Schlauch geformt, aus dem wiederum die einzelnen, gefüllten Teebeutel hergestellt werden. Die Leistung der Maschine liegt bei 400 Beute pro Minute.

Um an einer derartigen Teebeutelabpackmaschine eine Aromatisierung des Tees zu ermöglichen, ist mit Abstand vor der Tee-Dosiereinrichtung 4 eine Aroma-Dosiereinrichtung 7 angeordnet. Die Anordnung ist dabei derart vorgenommen, daß auf der Filterpapierbahn 1 dosierte, gesonderte Aromastoff-Häufchen 8 einzeln abgelegt werden, wobei der Vorgang des Ablegens durch die direkte Anordnung der Aroma-Dosiereinrichtung über der Filterpapierbahn 1 ohne Staubentwicklung durchgeführt wird. Hierzu ist unterhalb eines Reservoirs 9 für granulatförmigen Aromastoff auf einer angetriebenen Welle 10 eine Drehtrommel 11 befestigt, die synchron zu der Bewegung der Filterpapierbahn 1 in Richtung des Pfeils 12 kontinuierlich gedreht wird. Die Drehtrommel 11 weist zwei zueinander in einem stumpfen Winkel angeordnete, radial verlaufende Aussparungen 13, 14 auf, in denen Segmenteinsätze 15, 16 radial verstellbar angeordnet sind. Die Befestigung erfolgt mittels Schrauben, so daß die Segmenteinsätze 15, 16 auswechselbar sind, um die von ihnen gebildeten Dosierkammern in Form und Größe an die Eigenschaften des jeweiligen Aromastoffs anzupassen.

Zur Ausbildung der Dosierkammern 17, 18 sind die in radialer Richtung gesehen äußeren Böden der Segmenteinsätze 15, 16 tropfenförmig konkav gestaltet, wobei der dickere Teil des Tropfens in Drehrichtung nachlaufend angeordnet ist. In Verbindung mit einem die Drehtrommel 11 dicht umschließenden Gehäuse 19 kann in den derart gebildeten Kammern eine dosierte Menge an Aromastoff, die dem Reservoir 9 entnommen wird, direkt über die Filterpapierbahn 1 gefördert werden. Zu diesem Zweck ist das Gehäuse 19 unterhalb des Reservoirs 9 im Aromastoff-Aufnahmebereich und oberhalb der Filterpapierbahn 1 im Aromastoff-Abgabebereich offen ausgebildet. Zur Begünstigung der exakten Kammerbefüllung ist am Ende des Aufnahmebereiches ein Abstreifmesser 20 am Gehäuse befestigt, welches überschüssiges Granulat zurückhält und verhindert, daß Aromastoff in den Spalt zwischen der Drehtrommel 11 und dem Gehäuse 19 eindringt.

Zwischen der Tee-Dosiereinrichtung 4 und der Aroma-Dosiereinrichtung 7 ist eine Probenahmeeinrichtung 21 angeordnet. Diese besteht aus einer nicht dargestellten Vakuumpumpe und einem daran angeschlossenen Saugrohr 22, dessen Saugöffnung direkt oberhalb der Filterpapierbahn 1 positioniert ist. Es ist damit möglich, von der Aromastoff-Dosiereinrichtung gebildete Aromastoff-Häufchen von der Filterpapierbahn 1 abzusaugen und einer nicht dargestellten Auswertungseinheit zur Qualitäts- und Gewichtskontrolle zuzuführen. Ob überhaupt eine Ablage eines Aromastoff-Häufchens stattgefunden hat, kann mittels einer sensorischen Abtastung, beispielsweise einer Lichtschranke 24 festgestellt werden, die im Bewegungsweg vor oder hinter dem Saugrohr angeordnet sein kann. Im Ausführungsbeispiel befindet sich die Lichtschranke 24 hinter dem Saugrohr 22, um einerseits kontrollieren zu können, ob überhaupt ein Aromastoff-Häufchen zur gemeinsamen Verpackung mit dem Tee vorliegt und um darüber hinaus prüfen zu können, ob im Rahmen einer Probenahme auch eine vollständige Absaugung des Aromastoff-Häufchens stattgefunden hat.

Das von der Aroma-Dosiereinrichtung 7 abgelegte Aromastoff-Häufchen 23 wird sodann auf der Filterpapierbahn 1 unter das Übertragungsrad 6 der Tee-Dosiereinrichtung 4 befördert und dort von der dosierten abzupackenden Teemenge 25 vollständig abgedeckt, wie rechts in Fig. 1 der Zeichnung erkennbar ist. Die Anordnung des Aromastoff-Häufchens 23 innerhalb der Teeumhüllung 25 ist dabei vorzugsweise außermittig eingestellt, wie die Zeichnung verdeutlicht.

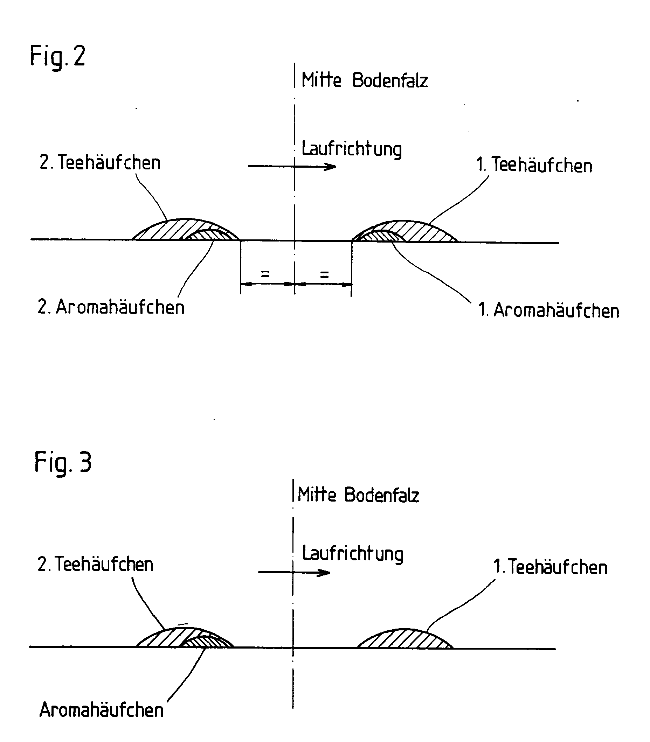

Die Figuren 2 und 3 zeigen zur Verdeutlichung der Variationsmöglichkeiten zwei Einstellungen der Drehtrommel 11, wobei gemäß Fig. 2 der Zeichnung beide Dosierkammern 17 und 18 zur Bildung von Aromahäufchen benutzt werden, während gemäß Fig. 3 der Zeichnung nur eine Dosierkammer 17 oder 18 für kleine Dosiermengen benutzt wird. Im Ergebnis wird gemäß Fig. 2 der Zeichnung ein Doppelkammerteebeutel hergestellt, bei dem beide Kammern eine Aromadosierung erhalten, während gemäß Fig. 3 der Zeichnung ein Doppelkammerteebeutel hergestellt wird, dessen eine Kammer nur Tee enthält, während die zweite Kammer Tee plus Aroma aufweist. Bei der Ausführungsform gemäß Fig. 3 der Zeichnung wird die erste Kammer 17 mit einem Verschlußkolben versehen, während die zweite Kammer 18 wie oben beschrieben mit dem Kolbeneinsatz 16 ausgerüstet ist.

Die Arbeitsweise obiger Vorrichtung zum Aromatisieren von Tee ergibt sich aus der nachfolgenden Beschreibung eines Ausführungsbeispiels:

Die Filterpapierbahn 1 bewegt sich kontinuierlich durch die Maschine. Nach Passieren der Umlenkrolle 3 wird mittels der Aroma-Dosiereinrichtung 7 auf der Filterpapierbahn 1 ein Aromastoff-Häufchen 8 bzw. 23 durch Entleeren der Dosierkammer 18 der Drehtrommel 11 abgelegt. Die Dosierkammer 18 ist im Rahmen der Drehbewegung der Drehtrommel 11 im oberen Aufnahmebereich aus dem Reservoir 9 heraus mit granulat- oder agglomeratförmigem Aromastoff gefüllt worden. Je nach Einstellung beträgt eine Aroma-Dosierung 0,1 bis 1 cm³ Aroma-Granulat folgender Korn-Größen-Verteilung:

| Verteilung in % | Korngröße in mm |
|---|---|
| weniger 1,0 | kleiner 0,2 |
| weniger 3,0 | 0,2 bis 0,5 |
| 30-50 | 0,5 bis 1,0 |
| 40-60 | 1,0 bis 1,4 |
| weniger 0,5 | 1,4 bis 2,0 |
| max. 0,2 | größer 2,0. |

Nach Passieren des Abstreifmessers 20 ist die Dosierkammer 18 für die weitere Drehbewegung durch das Gehäuse 19 verschlossen und wird erst wieder freigegeben, wenn die Abgabeposition direkt oberhalb der Filterpapierbahn 1 erreicht ist.

Das Aromastoff-Häufchen 8 bzw. 23 bewegt sich nun mit der Filterpapierbahn 1 in Richtung auf die Tee-Dosierungseinrichtung 4. Während dieser Zeit wird in der gleichen Weise die gefüllte Dosierkammer 17 auf der Filterpapierbahn entladen und wird ein zweites Aromastoff-Häufchen auf der Filterpapierbahn 1 abgelegt. Während nun mit der Aromastoff-Dosiereinrichtung 7 weitere Aromastoff-Häufchen gebildet werden, gelangt das erste Aromastoff-Häufchen 23 unter das Übertragungsrad 6 der Tee-Dosiereinrichtung 4 und wird dort vollständig mit einer dosierten Teemenge abgedeckt. Das derart gebildete Aroma-Tee-Häufchen ist in Fig. 1 der Zeichnung rechts zeichnerisch dargestellt und mit der Bezugsziffer 26 versehen.

In der gleichen Weise findet die Teezugabe über den anderen nachfolgenden Aromastoff-Häufchen statt und anschließend die Verpackung in Teebeuteln in an sich bekannter Weise.

In vorbestimmten Abständen wird die Probenahmeeinrichtung 21 aktiviert und werden n-Aromastoff-Häufchen mittels des Saugrohrs 22 abgesaugt und in einer Auswertungseinheit einer Gewichtskontrolle und einer Qualitätskontrolle unterzogen. Der Gesamtvorgang wird darüber hinaus mittels der Lichtschranke 24 überwacht, die bei Störungen die Teebeutelabpackmaschine abstellt.

### Bezugszeichenliste

- 1: Filterpapierbahn
- 2: Umlenkrolle
- 3: Umlenkrolle
- 4: Tee-Dosiereinrichtung
- 5: Dosierrad
- 6: Übertragungsrad
- 7: Aroma-Dosiereinrichtung
- 8: Aromastoff-Häufchen
- 9: Reservoir
- 10: Welle
- 11: Drehtrommel
- 12: Pfeil
- 13: Aussparung
- 14: Aussparung
- 15: Segmenteinsatz
- 16: Segmenteinsatz
- 17: Dosierkammer
- 18: Dosierkammer
- 19: Gehäuse
- 20: Abstreifmesser
- 21: Probenahmeeinrichtung
- 22: Saugrohr
- 23: Aromastoff-Häufchen
- 24: Lichtschranke
- 25: Teemenge
- 26: Aromastoff/Tee-Häufchen

## Patentansprüche

1. Verfahren zum Aromatisieren von Tee und teeähnlichen Erzeugnissen mit vorzugsweise granulierten Aromastoffen, bei dem aus einem Aromareservoir eine vorbestimmte Aromamenge abgezogen wird, die mit einer vorbestimmten Teemenge auf einer kontinuierlich bewegten Hüllstoffbahn, insbesondere Filterpapierbahn, aufgebracht wird und anschließend in daraus geformten Teebeuteln abgepackt wird,
**dadurch gekennzeichnet,**
daß der Aromastoff in einer ersten Verfahrensstufe als dosiertes, gesondertes Häufchen (8; 23) auf der Hüllstoffbahn (1) abgelegt wird, und daß anschließend in einer zweiten Verfahrensstufe ein Tee-Häufchen auf der Hüllstoffbahn benachbart abgelegt wird und nachfolgend gemeinsam mit einem Teebeutel abgepackt werden.

2. Verfahren nach Anspruch 1, dadurch gekennzeichnet, daß das Aromastoff-Häufchen (8; 23) mit Tee (25) in der vorgegebenen Menge im Rahmen eines separaten Ablagevorgangs abgedeckt wird derart, daß die das Aromastoff-Häufchen (8; 23) überlagernde und an allen freien Seiten umschließende Teemenge (25) als Siegel- und Schutzschicht für den Aromastoff während der sich anschließenden Transport- und Abpackvorgänge ausgebildet ist.

3. Verfahren nach Anspruch 2, dadurch gekennzeichnet, daß das innerhalb der Teemenge (25) angeordnete Aromastoff-Häufchen (8; 23) außermittig (Aromastoff/Tee-Häufchen 26) angeordnet wird.

4. Verfahren nach einem der Ansprüche 1 bis 3, dadurch gekennzeichnet, daß anschließend an die Ablage des Aromastoff-Häufchens (8; 23) auf der Hüllstoffbahn (1), jedoch vor der Ablage des Tee-Häufchens (26 bzw. 25) eine Qualitäts- und/oder Quantitätskontrolle der Aromadosierung durchgeführt wird.

5. Verfahren nach Anspruch 4, dadurch gekennzeichnet, daß eine bestimme Zahl von Aromastoff-Häufchen (8; 23) als Proben abgesaugt werden, die separat untersucht werden.

6. Verfahren nach einem der Ansprüchen 1 bis 5, dadurch gekennzeichnet, daß die Aromastoff-Häufchen flach abgelegt werden und eine Größe von 0,1 bis 1 cm³ haben, wobei als Granulat Aromastoff mit folgender Korngrößenverteilung verwendet wird:
| Verteilung in % | Korngröße in mm |
|---|---|
| weniger 1,0 | kleiner 0,2 |
| weniger 3,0 | 0,2 bis 0,5 |
| 30-50 | 0,5 bis 1,0 |
| 40-60 | 1,0 bis 1,4 |
| weniger 0,5 | 1,4 bis 2,0 |
| max. 0,2 | größer 2,0. |

7. Vorrichtung zur Durchführung des Verfahrens gemäß einem der Ansprüche 1 bis 6 mit einer über der Hüllstoffbahn (1) angeordneten Dosiereinrichtung (4) für den Tee und einer Dosiereinrichtung (7) für den Aromastoff, dadurch gekennzeichnet, daß die Aromastoff-Dosiereinrichtung (7) in bezug zu der Bewegungsrichtung der Hüllstoffbahn (1) mit Abstand vor der Tee-Dosiereinrichtung (4) direkt oberhalb der Hüllstoffbahn (1) angeordnet ist.

8. Vorrichtung nach Anspruch 7, dadurch gekennzeichnet, daß Abstand und Taktung der Aromastoff-Dosiereinrichtung (7) und der Tee-Dosiereinrichtung (4) so miteinander koordiniert sind, daß das Aromastoff-Häufchen (8; 23) an sämtlichen freien Seiten vom Tee (25) nach dessen Aufgabe auf die Hüllstoffbahn (1) abgedeckt ist.

9. Vorrichtung nach Anspruch 7, dadurch gekennzeichnet, daß die Aromastoff-Dosiereinrichtung (7) aus einem Reservoir (9) und einer daran angeschlossenen Drehtrommel (11) mit mindestens einer Dosierkammer (17; 18) zur Aufnahme von Aromastoff aus dem Reservoir (9) und Ablage des Aromastoffs als Häufchen auf der Hüllstoffbahn (1) besteht.

10. Vorrichtung nach Anspruch 8 oder 9, dadurch gekennzeichnet, daß die Drehtrommel (11) von einem sie umschließenden Gehäuse (19) unter Freilassung der Aromastoff-Aufnahme- und -Abgabebereiche abgedeckt ist.

11. Vorrichtung nach einem der Ansprüche 7 bis 10, dadurch gekennzeichnet, daß die Aromastoff-Dosiereinrichtung (7) gegenüber der Umgebung klimatisiert und/oder konditioniert ist.

12. Vorrichtung nach einem der Ansprüche 9 bis 11, gekennzeichnet durch ein Abstreifmesser (20) an der Drehtrommel (11) im Aufnahmebereich.

13. Vorrichtung nach einem der Ansprüche 9 bis 12, dadurch gekennzeichnet, daß die Drehtrommel (11) zwei einander im Winkel gegenüberliegende, sich in radialer Richtung erstreckende Aussparungen (13; 14) aufweist, die mit verstellbaren und/oder auswechselbaren Segmenteinsätzen (15; 16) versehen sind, deren außen angeordnete Flächen als Dosierkammern (17; 18), vorzugsweise tropfenförmig konkav, ausgebildet sind.

14. Vorrichtung nach Anspruch 13, dadurch gekennzeichnet, daß der voluminöse Teil des Tropfens in Drehrichtung der Drehtrommel (11) nachlaufend angeordnet ist.

15. Vorrichtung nach einem der Ansprüche 7 bis 14, dadurch gekennzeichnet, daß in Bewegungsrichtung hinter der Aromastoff-Dosiereinrichtung (7) eine Probenahme-Einrichtung (21) angeordnet ist.

16. Vorrichtung nach Anspruch 15, dadurch gekennzeichnet, daß die Probenahme-Einrichtung (21) aus einer Absaugeinrichtung mit einem über der Hüllstoffbahn (1) angeordneten Saugrohr (22) und einer Vakuumpumpe besteht.

17. Vorrichtung nach einem der Ansprüche 7 bis 16, dadurch gekennzeichnet, daß zwischen der Aroma-Dosiereinrichtung (7) und der Tee-Dosiereinrichtung (4), vorzugsweise vor und/oder hinter dem Saugrohr (22) eine Lichtschranke oder anderweitige sensorische Abtastung zur Kontrolle der abgelegten Aromastoff-Häufchen (8; 23) angeordnet ist.

## Claims

1. Process for flavouring tea and products similar to tea preferably using granulated aromatic substances, in which a predetermined quantity of flavour, which is applied to a continuously moved envelope material web, in particular filter paper web, with a predetermined quantity of tea, is drawn from a flavour reservoir and is then packed in tea bags shaped therefrom, characterised in that the aromatic substance is laid on the envelope material web (1) in a first process stage as a metered, separate small pile (8; 23), and in that then in a second process stage a small pile of tea is laid on the envelope material web next to it and then are packed together using a tea bag.

2. Process according to claim 1, characterised in that the small pile (8; 23) of aromatic substance is covered with tea (25) in the predetermined quantity within the course of a separate laying step such that the quantity of tea (25) overlying the small pile (8, 23) of aromatic substance and surrounding it on all free sides is formed as a sealing and protective layer for the aromatic substance during the subsequent transport and packing steps.

3. Process according to claim 2, characterised in that the small pile (8; 23) of aromatic substance arranged within the quantity of tea (25) is arranged off-centre (aromatic substance/small pile of tea 26).

4. Process according to one of claims 1 to 3, characterised in that a quality and/or quantity control for metering of flavour is then carried out on the deposit of the small pile (8; 23) of aromatic substance on the envelope material web (1), but before the deposit of the small pile of tea (26 or 25).

5. Process according to claim 4, characterised in that a certain number of small piles (8; 23) of aromatic substance are drawn off as samples which are investigated separately.

6. Process according to one of claims 1 to 5, characterised in that the small piles of aromatic substance are laid flat and have a size of 0.1 to 1 cm³, wherein aromatic substance having the following grain size distribution is used as granules:
| Distribution in % | Grain size in mm |
|---|---|
| less than 1.0 | smaller than 0.2 |
| less than 3.0 | 0.2 to 0.5 |
| 30-50 | 0.5 to 1.0 |
| 40-60 | 1.0 to 1.4 |
| less than 0.5 | 1.4 to 2.0 |
| maximum 0.2 | greater than 2.0. |

7. Device for carrying out the process according to one of claims 1 to 6 using a metering device (4) for the tea arranged above the envelope material web (1) and a metering device (7) for the aromatic substance, characterised in that the aromatic substance metering device (7) is arranged directly above the envelope material web (1) with respect to the direction of movement of the envelope material web (1) at a distance in front of the tea metering device (4).

8. Device according to claim 7, characterised in that distance and synchronising of the aromatic substance metering device (7) and the tea metering device (4) are coordinated with one another so that the small pile (8; 23) of aromatic substance is covered on all free sides by the tea (25) after releasing it on the envelope material web (1).

9. Device according to claim 7, characterised in that the aromatic substance metering device (7) comprises a reservoir (9) and a rotary drum (11) connected thereto having at least one metering chamber (17; 18) to receive aromatic substance from the reservoir (9) and lay the aromatic substance as a small pile on the envelope material web (1).

10. Device according to claim 8 or 9, characterised in that the rotary drum (11) is covered by a housing (19) surrounding it while exposing the aromatic substance receiving and releasing regions.

11. Device according to one of claims 7 to 10, characterised in that the aromatic substance metering device (7) is air-conditioned and/or ordered with respect to the surroundings.

12. Device according to one of claims 9 to 11, characterised by a scraper blade (20) on the rotary drum (11) in the receiving region.

13. Device according to one of claims 9 to 12, characterised in that the rotary drum (11) has two recesses (13; 14) extending in the radial direction facing one another at an angle which are provided with adjustable and/or exchangeable segment inserts (15; 16), the surfaces arranged on the outside of which are designed as metering chambers (17; 18), preferably concavely like drops.

14. Device according to claim 13, characterised in that the voluminous part of the drop is arranged to trail in the direction of rotation of the rotary drum (11).

15. Device according to one of claims 7 to 14, characterised in that a sampling device (21) is arranged behind the aromatic substance metering device (7) in the direction of movement.

16. Device according to claim 15, characterised in that the sampling device (21) comprises a suction device having a suction pipe (22) arranged above the envelope material web (1) and a vacuum pump.

17. Device according to one of claims 7 to 16, characterised in that a light barrier or other sensory scanning for controlling the laid small pile (8; 23) of aromatic substance is arranged between the flavour metering device (7) and the tea metering device (4), preferably in front of and/or behind the suction pipe (22).

## Revendications

1. Procédé pour aromatiser du thé et des produits analogues au thé avec des substances aromatiques de préférence granulées, procédé dans lequel une quantité prédéterminée d'arôme est prélevée dans un réservoir d'arôme, est déposée avec une quantité prédéterminée de thé sur une bande de matériau d'enveloppe, en particulier de papier-filtre, à défilement continu, et est ensuite ensachée dans des sachets pour thé réalisés à partir de ladite bande de matériau d'enveloppe, caractérisé en ce que, dans une première étape de procédé, la substance aromatique est déposée sur la bande de matériau d'enveloppe (1) sous la forme de tas dosés séparés (8 ; 23), et en ce que, dans une deuxième étape de procédé, un tas de thé est ensuite déposé sur la bande de matériau d'enveloppe au voisinage du tas de substance aromatique, lesdits tas étant ensuite ensachés ensemble avec un sachet pour thé.

2. Procédé selon la revendication 1, caractérisé en ce que le tas de substance aromatique (8, 23) est ensuite recouvert de thé (25) en quantité prédéfinie dans le cadre d'une opération de dépôt séparée, de sorte que la quantité de thé (25) qui est superposée au tas de substance aromatique (8; 23) et qui l'entoure sur tous les côtés libres fait fonction de couche de scellement et de protection de la substance aromatique durant les opérations ultérieures de transport et d'ensachage.

3. Procédé selon la revendication 2, caractérisé en ce que les tas de substance aromatique (8 ; 23) disposés à l'intérieur de la quantité de thé (25) sont décentrés (tas de substance aromatique/thé 26).

4. Procédé selon l'une des revendications 1 à 3, caractérisé en ce qu'un contrôle qualitatif et quantitatif du dosage aromatique est réalisé après le dépôt du tas de substance aromatique (8 ; 23) sur la bande de matériau d'enveloppe (1), mais avant le dépôt du tas de thé (26 et, respectivement, 25).

5. Procédé selon la revendication 4, caractérisé en ce qu'un nombre déterminé de tas de substance aromatique (8 ; 23) sont aspirés à titre d'échantillons pour être analysés séparément.

6. Procédé selon l'une des revendications 1 à 5, caractérisé en ce que les tas de substance aromatique sont déposés à plat et possèdent un volume de 0,1 à 1 cm³, la substance aromatique utilisée comme granulat présentant la répartition granulométrique suivante :
| répartition en % | grosseur des grains en mm |
|---|---|
| moins de 1,0 | inférieure à 0,2 |
| moins de 3,0 | 0,2 à 0,5 |
| 30-50 | 0,5 à 1,0 |
| 40-60 | 1,0 à 1,4 |
| moins de 0,5 | 1,4 à 2,0 |
| 0,2 maxi | supérieure à 2,0, |

7. Dispositif pour réaliser le procédé selon l'une des revendications 1 à 6, comprenant un système de dosage de thé (4) disposé au-dessus de la bande de matériau d'enveloppe (1) et un système de dosage de substance aromatique (7), le système de dosage de substance aromatique (7) étant disposé, par rapport à la direction de déplacement de la bande de matériau d'enveloppe (1), à distance en amont du système de dosage de thé (4), juste au-dessus de la bande de matériau d'enveloppe (1).

8. Dispositif selon la revendication 7, caractérisé en ce que l'écartement et la cadence du système de dosage de substance aromatique (7) et du système de dosage de thé (4) sont coordonnés l'un avec l'autre de façon que le tas de substance aromatique (8 ; 23) soit recouvert sur tous ses côtés libres par du thé (25) après le dépôt de celui-ci sur la bande de matériau d'enveloppe (1).

9. Dispositif selon la revendication 7, caractérisé en ce que le système de dosage de substance aromatique (7) se compose d'un réservoir (9) et d'un tambour rotatif (11) qui y est contigu et qui est pourvu d'au moins une chambre doseuse (17 ; 18) pour recevoir de la substance aromatique provenant du réservoir (9) et pour déposer la substance aromatique en tas sur la bande de matériau d'enveloppe (1).

10. Dispositif selon la revendication 8 ou 9, caractérisé en ce que le tambour rotatif (11) est recouvert par un boîtier (19) qui l'entoure en laissant libres les zones de réception et de dépôt de substance aromatique.

11. Dispositif selon l'une des revendications 7 à 10, caractérisé en ce que le système de dosage de substance aromatique (7) est climatisé et/ou conditionné par rapport à son environnement.

12. Dispositif selon l'une des revendications 9 à 11, caractérisé par une racle (20) disposée contre le tambour rotatif (11) dans la zone de réception.

13. Dispositif selon l'une des revendications 9 à 12, caractérisé en ce que le tambour rotatif (11) comporte deux évidements (13 ; 14) qui sont opposés en formant entre eux un angle et s'étendent dans la direction radiale et qui sont garnis de segments rapportés réglables et/ou échangeables (15 ; 16) dont les surfaces situées à l'extérieur sont conformées en chambres doseuses (17 ; 18), de préférence avec une concavité en forme de goutte.

14. Dispositif selon la revendication 13, caractérisé en ce que la partie renflée de la goutte est disposée à l'arrière par rapport à la direction de rotation du tambour rotatif (11).

15. Dispositif selon l'une des revendications 7 à 14, caractérisé en ce qu'un dispositif de prélèvement d'échantillon (21) est disposé derrière le système de dosage de substance aromatique (7) par rapport à la direction de déplacement.

16. Dispositif selon la revendication 15, caractérisé en ce que le dispositif de prélèvement d'échantillon (21) se compose d'un dispositif d'aspiration, avec un tube d'aspiration (22) disposé au-dessus de la bande de matériau d'enveloppe (1), et d'une pompe à vide.

17. Dispositif selon l'une des revendications 7 à 16, caractérisé en ce qu'un barrage photoélectrique ou un autre moyen de détection est disposé entre le dispositif de dosage aromatique (7) et le système de dosage de thé (4), de préférence devant et/ou derrière le tube d'aspiration (22), pour contrôler la présence des tas de substance aromatique déposés (8 ; 23).
